# EUROPEAN PATENT APPLICATION

(11) **EP 1 244 022 A1**
(43) Date of publication of application: **25.09.2002**
(21) Application number: 01830193.7
(22) Date of filing: 20.03.2001
(51) Int. Cl.: G06F 15/02, G06F 3/023

(54) **An alphanumeric string converter for devices for data entry in computers**

(71) Applicant: Microsys S.n.c. di Bovina Maurizio & C., 40010 Bentivoglio (Bologna) (IT)
(72) Inventor: Bovina, Maurizio, 40013 Castel Maggiore (Bologna) (IT)
(74) Representative: Lanzoni, Luciano

(57) **Abstract**

An alphanumeric string converter for devices for data entry in computers comprises an input interface (2) for connection to a data entry device (3), an output interface (4) for connection to a computer (5) and a circuit apparatus (6) inserted between the interfaces (2, 4). The circuit apparatus (6), equipped with a memory (8) and CPU (9), is designed to transform a string to be converted (30a) incorporated in a main signal (30) from the data entry device (3) into a corresponding converted string (30b) to be sent to the computer (5) by means of a transmit signal (31).

## Description

As is known, there are various types of data entry devices, able to transfer information to a computer in the form of scan codes. The latter are special signals which may be sent, for example to an ordinary PC, using known PS2, USB, serial, etc. type interfaces to transfer various types of information to the PC.

The most widely used data entry devices on sale are the conventional keyboards attached to PCs and to the terminals connected to a single central computer, which use the above-mentioned scan codes to tell the computer which keys have been pressed by an external user.

Each key has an associated hexadecimal code (a scan code), which is sent to the computer when the key is pressed.

The scan code generated when a given key is pressed is always the same, irrespective of whether or not other keys are pressed simultaneously, for example, the SHIFT key, the CTRL key or whether or not the CAPS LOCK key is on. The keyboard BIOS is designed to recognise situations of this type and to ensure that the commands executed are the correct ones, which actually correspond to the key combination used.

However, not all keyboards are made in such a way that they generate the same scan code when the same keys are pressed. In other words, pressing the same key on different keyboards may produce different scan codes. Additionally, the characters may be arranged differently on the keyboards, depending on the country in which the keyboard is made. For example, whilst on many international keyboards the letters from left to right on the top line begin with "QWERTY", the same keys on German keyboards read "QWERTZ".

As a result, there are some differences in keyboard operation depending on the country in which they are made and, in general, the methods used to make the keyboards.

Communication between the keyboard and the computer normally occurs using two separate lines (DATA and CLOCK), for the best possible management of a bi-directional data flow.

The logic state of the two lines (high or low) is controlled by the computer. When the CLOCK line and the DATA line are both in the high logic state, the computer is ready to receive information about the keys pressed on the keyboard and to display the corresponding characters on the monitor (or execute the command identified by the combination of keys pressed).

When the logic state of the CLOCK line is low and the DATA line is high, the computer cannot immediately read the keys pressed on the keyboard. Therefore, all data is buffered in a suitable register, from which it is taken and sent to the computer as soon as the latter frees the required resources.

When it is the computer which must send commands to the keyboard (for example, lighting of the LEDs on the keyboard next to the "NUM LOCK", "CAPS LOCK", "SCROLL LOCK" labels), the CLOCK line is set to a high logic state and the DATA line is kept in a low state, so that the keyboard can receive said commands.

When both the CLOCK and DATA lines are in the low logic state, the system state is undefined and it is not used for data exchange.

A communications protocol similar to the one described above with reference to keyboards is used by many other data entry devices using "keyboard emulation". The latter may receive different types of input signals and transfer the relative data to a computer by generating suitable scan codes. In other words, it is as if an operator were reading the data at the device input and typing the corresponding commands and information on a conventional keyboard to enter the data in the computer.

A typical example of a device which operates using keyboard emulation is a bar code reader, found in shops or supermarkets: a handy reading device, which detects the information contained in a bar code and sends it to a processing block which, thanks to suitable previously-saved comparison parameters, can recognise the data and generate corresponding scan codes to transmit it to a computer.

Other known devices which operate using keyboard emulation are magnetic card readers, chip card readers and many other types of identification apparatus where the speed required for the data transfer is low and, as a result, the technological level necessary in terms of hardware and software is not particularly high.

The basic feature of this type of device is that it can operate irrespective of whether or not there is a keyboard connected to the computer to which the information must be sent. In other words, the known devices which use keyboard emulation may completely substitute a keyboard, since they independently generate the scan codes needed for data transfers.

All of the data entry devices described, keyboards and devices operating using keyboard emulation are passive devices, that is to say, they cannot perform any operations on the data which they generate.

In particular, the known devices are not set up to monitor, check and filter the scan codes which they generate, nor can they apply any kind of conversion or change to the scan codes in the case of pre-set events or commands issued by the user.

In contrast, known devices which are able to convert data are, for example, scientific computers which, thanks to suitable software installed in the internal microprocessor and corresponding command keys which can be activated by a user, can perform various types of data conversion (for example, transform decimal numbers into binary or hexadecimals, or use radians to express angle measurements initially in degrees).

Moreover, many computers even not of the scientific type, marketed in recent months, allow automatic currency conversions (typically, convert sums expressed in Lire or other national currencies into Euros).

A clear disadvantage linked to this type of device emerges due to the fact that, once the data item is obtained in the desired form, the latter cannot be sent directly to a PC (unless manually entered by an operator) and, as a result, cannot be used in applications run by the PC (for example, a numeric value expressed using a particular unit of measurement may have to be entered in a text file).

To deal with this disadvantage, suitable software was created and installed on computers, able to perform various types of conversions. For example, there are routines which can be associated with the most widespread text editors, which can automatically correct some spelling mistakes.

However, it is obvious that the environment for use of the above-mentioned software converters is limited to the application to which they are associated and, in general, to the operating system used by the computer. It is known that a routine or a software compatible with a given operating system require substantial changes in order to function correctly on computers which support different operating systems.

The aim of the present invention is, therefore, to provide a string converter which can be operatively associated with a computer and with a data entry device irrespective of the operating system and of type of applications used by the computer.

Another aim of the present invention is to provide a string converter, and in particular a currency converter, which can be used with any type of computer and keyboard currently sold, without the need for any changes from a software or hardware point of view.

These and other aims are substantially achieved by a string converter as described in the claims herein.

Further characteristics and advantages are more clearly illustrated in the detailed description which follows, with reference to the accompanying drawings, which illustrate a preferred embodiment of a string converter without limiting the scope of application, and in which:
- Figure 1 is a block diagram of a string converter, in accordance with the present invention;
- Figure 2 shows the logic structure of a memory used in the converter illustrated in Figure 1;
- Figure 3 shows the content of signals used by the device illustrated in Figure 1;
- Figure 4 shows a data entry device incorporating the converter illustrated in Figure 1;
- Figure 5 shows an electronic data processing apparatus incorporating the converter illustrated in Figure 1.

The string converter disclosed is labelled 1 in the accompanying drawings.

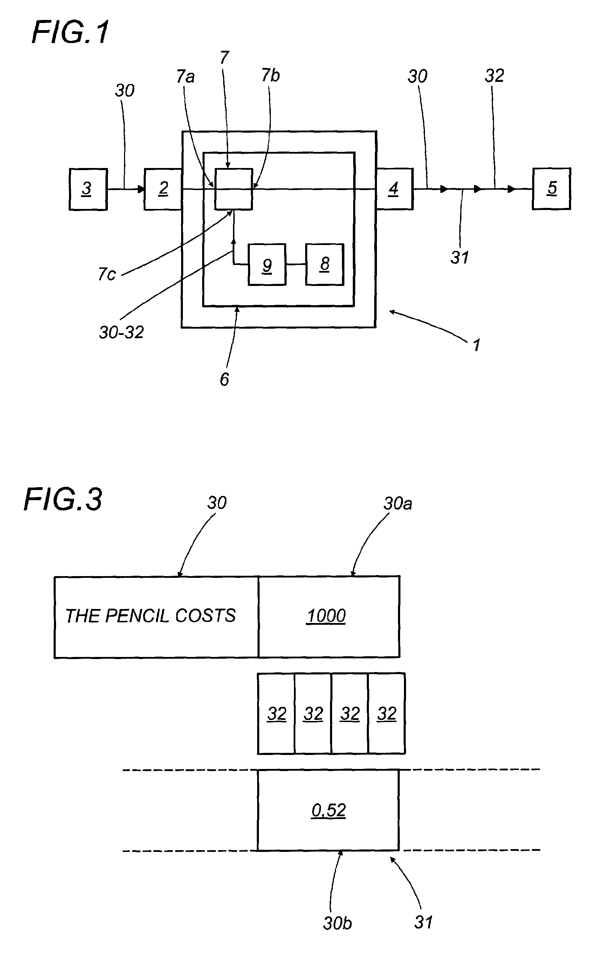

The converter 1 is designed to transform strings arriving from a data entry device 3 and send the corresponding converted strings to a computer 5. For this purpose, the converter 1 has an input interface 2 for connection to the data entry device 3 and an output interface 4 for connection to the computer 5 (Figure 1).

The output interface 4 preferably allows the converter 1 to receive electrical power from the computer 5.

The connection between the input interface 2 and the data entry device 3 and the connection between the output interface 4 and the computer 5 may be obtained using either conventional cables, or using "wireless" technologies (with, for example, infrared ports).

In this case, the converter 1 has a power supply independent of the keyboard and/or computer (for example, it is battery powered).

The data entry device 3 may advantageously be made in the form of a keyboard. Voice-recognition dictation devices are also available, for use in combination with or in place of said keyboard.

The computer 5 may be a conventional PC or other digital data processing device.

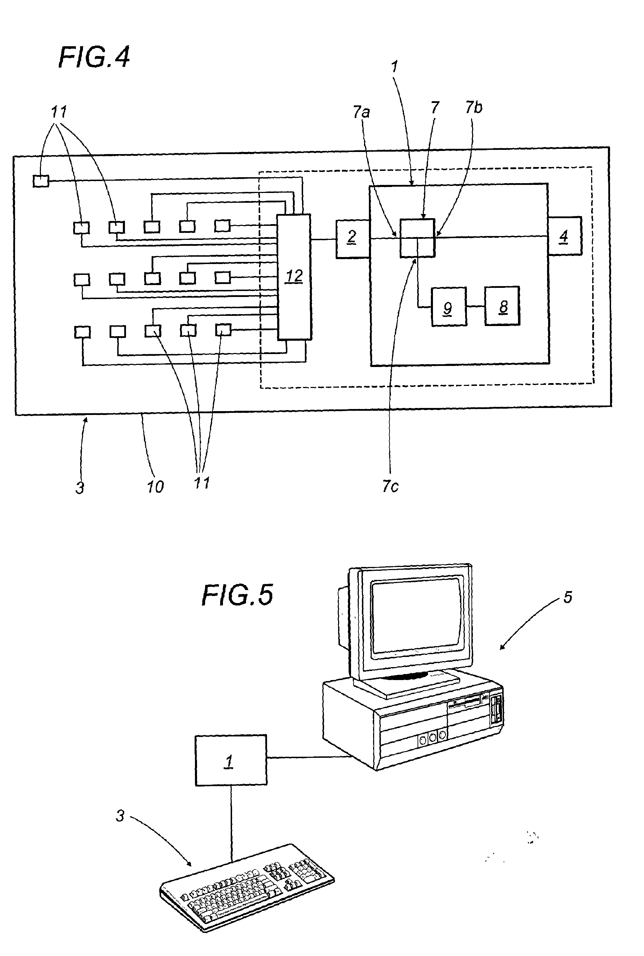

The converter 1 uses the input interface 2 to receive a main signal 30 from the data input device 3. This signal may consist of any number of characters and/or commands entered by a user (see Figure 3). In particular, the main signal 30 incorporates a string to be converted 30a which, as explained below, is subjected to special processing in order to obtain a corresponding converted string 30b.

The string to be converted 30a must first be selected within the main signal 30. The string to be converted 30a is then processed according to a preset algorithm to obtain the corresponding converted string 30b. In order to carry out these operations, the converter 1 is equipped with a circuit apparatus 6, operatively inserted between the input interface 2 and the output interface 4. Said apparatus 6 comprises a memory 8, in which all of the necessary information is registered. The memory 8 can contain a preset number of control parameters 20, with which the main signal 30 is compared in order to select the string to be converted 30a inside it, and a preset number of conversion parameters 21, needed for conversion of the string to be converted 30a.

The comparison, selection and conversion steps are performed by a CPU 9, connected to the memory 8 and to the two interfaces 2, 4. As indicated above, the CPU 9 can compare the main signal 30 with the control parameters 20 to select the string to be converted 30a. It can apply the conversion parameters 21 to the string to be converted 30a in order to obtain the corresponding converted string 30b, and it can generate and send to the computer 5 a transmit signal 31 incorporating the converted string 30b (the above-mentioned parameters are indicated in the accompanying drawings using example alphanumeric values, such as a, b, ... z, etc.).

The circuit apparatus 6 also, conveniently, has an addressing block 7, for suitably directing the converter 1 input and output signals. The addressing block 7 has a first communication port 7a, used to connect it to the input interface 2, a second communication port 7b, used to connect it to the output interface 4, and a third communication port 7c, with which it is connected to the CPU 9.

In this way, the main signal 30 from the data entry device 3 is input into both the CPU 9 and the computer 5. The CPU 9 can, therefore, continuously monitor the content of the strings arriving from the data entry device 3 and perform the necessary conversions. After each conversion, again using the addressing block 7 and the output interface 4, the CPU 9 can send the converted strings to the computer 5.

The CPU 9 can also generate a delete signal 32, also for the computer 5. The delete signal 32 is required in order to substitute the string to be converted 30a with the converted string 30b. Before the conversion is performed, the content of the main signal 30 is normally made available to a user through suitable display means, for example a computer monitor, and is saved in a memory associated with the computer 5, allowing further processing by the computer 5 if necessary. It is, therefore, the task of the converter 1, and in particular the CPU 9, to delete the string to be converted 30a from the visual support used and from the computer 5 memory, using the above-mentioned delete signal 32, then make the content of the converted string 30b available to the user by sending the transmit signal 31.

Advantageously, the above-mentioned main signal 30, transmit signal 31 and delete signal 32 may be of the scan code type, that is to say, of the type normally used by conventional keyboards for data entry in a computer.

This means that the signals which the converter 1 can receive as input are those generated by the majority of known types of keyboards. Moreover, the converter 1 is set up to generate signals of the same type as output and, therefore, operate using keyboard emulation. In other words, when the converter 1 must send the transmit signal 31 and delete signal 32 to the computer 5, it generates scan code sequences corresponding to the characters and/or commands to be transmitted.

For example, the delete signal 32 may consist of a succession of Backspaces, equalling the number of characters in the string to be converted 30a. In this way, the converter 1 simulates the operations performed by a hypothetical operator who, using a keyboard, deletes the string to be converted 30a (by pressing the Backspace key the required number of times) and, after applying a given algorithm, types the converted string 30b using the same keyboard.

A particular field of application for the converter 1 may be that of numeric conversions of quantities expressed using different units of measurement.

For example, the converter 1 may be used to express in kilograms quantities which were initially indicated in grams, or for converting temperatures from degrees Centigrade to Kelvins or degrees Fahrenheit.

In these cases, the string to be converted 30a normally contains a number (for example, 1000) which expresses a preset quantity according to a first unit of measurement (e.g.: grams). The control parameters 20 consists of a set of preset codes which allow the CPU 9 to recognise the numeric characters in a text string (the main signal 30) entered by a user. The conversion parameters 21 consist of all of the constants required for the conversion (e.g.: a 0.001 factor to pass from grams to kilograms), whilst the converted string 30b contains a number (e.g.: 0.1) which expresses the above-mentioned preset quantity according to a second unit of measurement which is different from the first (e.g.: kilograms).

Advantageously, the converter 1 can be used for currency conversion. In other words, its operation may be programmed in such a way that, following the issue of a suitable command by a user, a numeric quantity expressed in a first currency may be converted into a second currency.

The converter 1, in particular, may be set in such a way that one of the currencies, preferably the second, is the Euro. In this way, the converter 1 can convert sums initially expressed in a preset national currency into Euros.

In addition, thanks to a special logic structure in the memory 8, the converter 1 can carry out currency conversions starting with various national currencies.

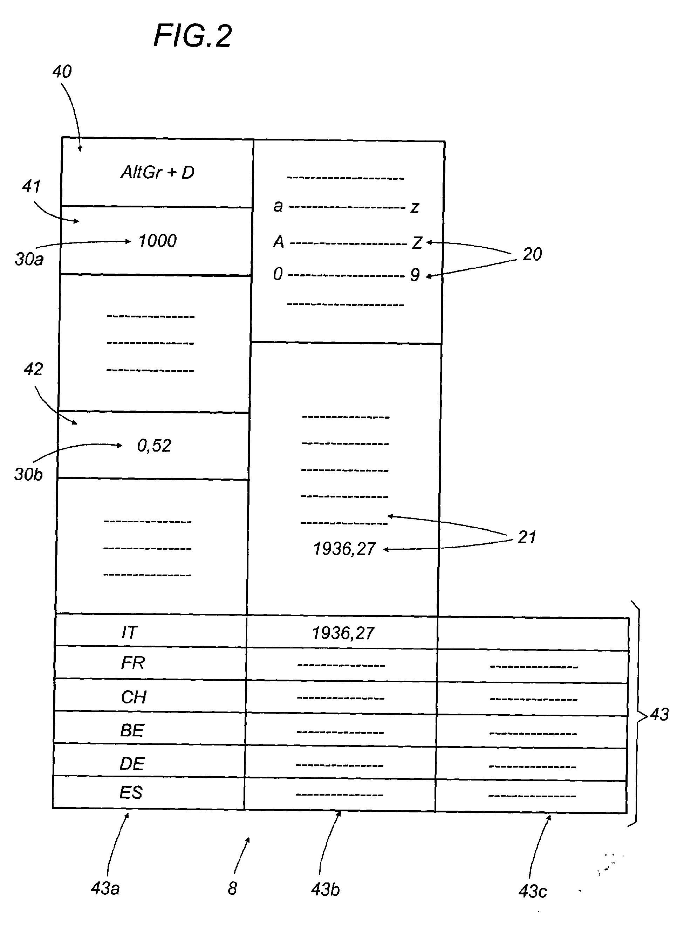

Figure 2 in particular illustrates how the memory 8 can contain a plurality of records 43. Each record 43 consists of at least two fields 43a, 43b. The first field 43a contains a unique identification code associated with a nation (indicated in Figure 2 with the initials of some European nations by way of example only), whilst the second field 43b, associated with the first field 43a, is used to save all of the parameters needed to convert a sum expressed in the national currency indicated by the identification code in field 43a into a different currency.

For example, the nation identified by the content of the first field 43a may be Italy and the aim may be to convert sums initially expressed in Lire into Euros. The second field 43b will contain the constant 1936.27, which will be used by the CPU 9 to divide the value of the sum expressed in Lire so as to obtain the corresponding value in Euros.

The other records have a similar structure, so that the CPU 9 is supplied with all of the data needed for the required conversions.

A third field 43c may be added to the other two, to save the operating characteristics and associations between keys and scan codes used in the various keyboards. As is known, in some countries, standards are slightly different from the international standards normally used and, as a result, in order to function correctly, the converter 1 needs to recognise the type of keyboard to which it is connected.

This provides a further advantage, since, once the country in which the keyboard was produced is recognised, the group of parameters relative to the desired conversion (typically a national currency - Euro conversion) is automatically identified in the memory 8. Alternatively, the conversion algorithm and relative parameters may be entered by the user before starting a work session. The user can customise the conversion type and method according to his/her own requirements, pre-setting the content of the memory 8 using the data entry device 3.

Moreover, the memory 8 can be organised in such a way that it also has a first register 40, designed to save a preset combination of keys which a user must press in order to activate the conversion operations. Obviously, the content of the first register 40 is used by the CPU 9 to recognise the above-mentioned combination of keys when entered by the user.

It is important to notice the following, from the operating viewpoint.

Firstly, if necessary, the user enters the desired type of conversion and the relative conversion parameters 21, which are suitably registered in the memory 8.

Then, entry of a set of data in the computer 5 is started, using the device 3. Each time the converter 1 recognises a possible string to be converted 30a (that is to say, for example, a succession of figures if a numeric conversion has been set), it saves it in a second register 41 in the memory 8.

In the example in Figure 3, the converter 1 is programmed to perform Lire/Euro conversions. The main signal 30 consists of the string "the pencil costs 1000" The string to be converted 30a is the number "1000", which is recognised and saved in the second register 41.

If the user presses the combination of keys saved in the first register 40 (e.g.: AltGr + D), the CPU 9 begins the conversion operation. It applies the conversion parameters 21 to the string to be converted 30a, selected from within the main signal 30 and saved in the second register 41, and obtains the corresponding converted string 30b.

Again with reference to Figure 3, the division 1000/1936.27 is performed (the latter figure is the preset conversion parameter 21) and the result is "0.52", that is to say, the converted string 30b.

The converted string 30b is saved in a third register 42, before being sent to the computer 5.

If, instead, the user does not press the combination of keys saved in the first register 40, no conversion is performed and the second register 41 is freed and made available for saving subsequent data.

In a preferred embodiment, the CPU 9 also generates a delete signal 32. The latter is designed to delete the string to be converted 30a from the display means and from the memory associated with the computer 5. The delete signal 32 consists of a sequence of BackSpaces (sent in scan code form and labelled 32, as in Figure 3), the number equalling the characters which form the string to be converted 30a.

Then, the CPU 9 generates the transmit signal 31, incorporating the converted string 30b, and sends it to the computer 5, again in scan code form.

This allows the correct substitution of the string to be converted 30a with the converted string 30b.

Advantageously, the converter 1 can be directly incorporated in the data entry device 3, making the structure of the entire hardware apparatus more compact and so taking up less space.

The most widespread data entry devices 3 are conventional keyboards. As illustrated in Figure 4, these comprise a support body 10, substantially having the shape of a parallelepiped, and a plurality of keys 11, each associated with at least one character and/or command (printed on the upper surface of each key). The keys 11 are mounted on the support body 10 in such a way as to make said upper surface visible and allow the user to enter various types of data and information in the computer 5.

A detector unit 12 positioned inside the support body 10 is operatively attached to the keys 11 and designed to recognise which of the keys 11 are pressed. The information detected in this way is then sent to the computer 5. In particular, the computer 5 is sent the main signal 30 incorporating the string to be converted 30a, entered by the user.

The converter 1 may be housed in a box-shaped structure separate from the keyboard or, alternatively, it may be mounted on the support body 10 and, preferably, housed in the support body 10.

The input interface 2 of the converter 1 is connected to the detector unit 12 to receive the main signal 30 from said detector unit 12. The output interface 4 is connected to the computer 5, to send the computer the transmit signal 31 and the delete signal 32.

Finally, the converter 1 may consist of a hardware apparatus which is physically independent of the data entry device 3, or may be built into the device 3, while still maintaining its functions practically unchanged.

The converter 1 may also be fully housed within the computer 5, again to reduce the overall dimensions of the apparatus. In this case, the user is also provided with suitable installation software, so that the new device is recognised by the computer and, as a result, can be used correctly.

In a preferred embodiment, the converter 1 is assembled in such a way that it can be connected to various data entry devices. In this case, the input interface 2 of the converter 1 comprises a plurality of communication channels, each of which may be connected to a corresponding data entry device. Said devices may be of different types (keyboards, dictation devices with voice recognition capabilities, bar code, magnetic card and chip card readers, etc.).

Since it must receive data input using various communication channels, the CPU 9 is set up to use periodic scan cycles to selectively detect any main signals 30 entered through the communication channels. In other words, the CPU 9 is programmed to periodically check whether or not there is any information arriving from each channel and, if necessary, to perform the required conversions.

The present invention brings important advantages.
Firstly, the converter made in accordance with the present invention can operate correctly with any type of computer able to receive scan code type signals as input, irrespective of the operating system installed and the applications used by the computer.

Moreover, thanks to the logic structure of the memory 8, the converter is able to correctly recognise the signals generated by data entry devices made using different methods and can perform the corresponding conversion operations.

A further advantage is the fact that, in order to perform its functions, a converter made in accordance with the present invention does not require any adaptations (software or hardware) to the data entry device or the computer to which it is connected. In other words, the converter 1 is integrated between the keyboard and the computer without requiring structural changes to either and is transparent to the keyboard - computer data flow and vice versa, unless its operation is requested, preferably using a preset scan code combination from the input device.

## Claims

1. An alphanumeric string converter for devices for data entry in computers, **characterised in that** it comprises:
- an input interface (2) which may be connected to a data entry device (3) to receive at least a main signal (30) incorporating a string to be converted (30a) from said data entry device (3);
- an output interface (4) which may be connected to a computer (5) for sending the computer (5) the main signal (30) and at least a transmit signal (31) incorporating at least a converted string (30b) corresponding to the string to be converted (30a);
- a circuit apparatus (6) operatively inserted between the input interface (2) and the output interface (4) and able to obtain the converted string (30b) from the string to be converted (30a), the circuit apparatus (6) comprising:
- a memory (8) designed to contain:
- a preset number of control parameters (20), for recognising the string to be converted (30a) within the main signal (30);
- a preset number of conversion parameters (21) for obtaining the converted string (30b) from the string to be converted (30a);
- a CPU (9) operatively connected to the memory (8), to the input interface (2) and the output interface (4), said CPU (9) being able to:
- compare the main signal (30) received through the input interface (2) with the control parameters (20), for selecting at least one string to be converted (30a) within the main signal (30);
- apply the conversion parameters (21) to the string to be converted (30a), obtaining the corresponding converted string (30b);
- generate a transmit signal (31) incorporating the converted string (30b);
- send a transmit signal (31) to the computer (5) through the output interface (4).

2. The converter according to claim 1, **characterised in that** the circuit apparatus (6) also comprises an addressing block (7) with:
- a first communication port (7a) connected to the input interface (2) for receiving the main signal (30) from the input interface (2);
- a second communication port (7b) connected to the output port (4) for sending the main signal (30) and the transmit signal (31) to the computer (5) through the output interface (4);
- a third communication port (7c) connected to the CPU (9) for sending the main signal (30) to the CPU (9).

3. The converter according to claim 1, **characterised in that** the main signal (30) is of the scan code type.

4. The converter according to claim 1 or 2, **characterised in that** the transmit signal (31) is of the scan code type.

5. The converter according to any of the foregoing claims, **characterised in that** the CPU (9) is also designed to generate a delete signal (32) for the string to be converted (30a), said signal being intended for the computer (5), to allow substitution of the string to be converted (30a) with the converted string (30b).

6. The converter according to claim 5, **characterised in that** the delete signal (32) is of the scan code type.

7. The converter according to claim 1, **characterised in that** the string to be converted (30a) contains a number which expresses a preset quantity according to a first unit of measurement.

8. The converter according to claim 7, **characterised in that** the converted string (30b) contains a number which expresses the preset quantity according to a second unit of measurement, the latter being different from the first unit of measurement.

9. The converter according to claim 8, **characterised in that** the conversion parameters (21) saved in the memory (8) comprise a preset number of constants, allowing the CPU (9) to calculate the preset quantity expressed in the second unit of measurement, starting with the preset quantity expressed in the first unit of measurement.

10. The converter according to claim 8, **characterised in that** the first unit of measurement is a currency.

11. The converter according to claim 10, **characterised in that** the second unit of measurement is a currency, preferably the Euro.

12. The converter according to claim 1, **characterised in that** the memory (8) comprises a first register (40) for saving a preset combination of keys used by a user when a conversion must be performed.

13. The converter according to claim 1, **characterised in that** the memory (8) comprises a second register (41) for saving the string to be converted (30a).

14. The converter according to claim 1, **characterised in that** the memory (8) comprises a third register (42) for saving the converted string (30b).

15. The converter according to claim 11, **characterised in that** the memory (8) comprises a preset number of records (43), each record having a first field (43a) and at least one second field (43b) associated with the first field (43a), the first field (43a) being designed to contain a unique identification code associated with a preset nation, the second field (43b) being designed to contain the parameters needed to convert a sum expressed in the first currency into the second currency, said first currency being the currency of a preset nation and the second currency preferably being the Euro.

16. The converter according to any of the foregoing claims, **characterised in that** the input interface (2) comprises a plurality of communication channels, each being designed to be connected to a corresponding data input device, the CPU (9) being designed to use periodic scan cycles to selectively detect any main signals (30) entered using the communication channels.

17. A data entry device, designed for connection to a computer (5), comprising:
- a support body (10);
- a plurality of keys (11), each associated with at lest one character and/or command and being mounted on the support body (10) to allow a user to enter at least one string of characters to be converted (30a) to be transferred to the computer (5);
- a detector unit (12) operatively connected to the keys (11) and designed to:
- recognise which keys (11) have been pressed by the user when entering the string to be converted (30a);
- send the computer (5) a corresponding main signal (30) incorporating the string to be converted (30a), the data entry device being **characterised in that** it comprises a string converter (1) mounted on the support body (10) and operatively connected to the detector unit (12), said converter (1) having:
- an input interface (2) for connection to the detector unit (12), for receiving at least the main signal (30) from the detector unit (12);
- an output interface (4) for connection to the computer (5), for sending the computer (5) the main signal (30) and at least a transmit signal (31) incorporating at least a converted string (30b) corresponding to the string to be converted (30a).
- a circuit apparatus (6) operatively inserted between the input interface (2) and the output interface (4) and able to convert the string to be converted (30a) into the converted string (30b), the circuit apparatus (6) being equipped with:
- a memory (8) designed to contain:
- a preset number of control parameters (20) for recognising the string to be converted (30a) within the main signal (30);
- a preset number of conversion parameters (21) for obtaining the converted string (30b) from the string to be converted (30a);
- a CPU (9) operatively connected to the memory (8), to the input interface (2) and the output interface (4), the CPU (9) being able to:
- compare the main signal (30) received through the input interface (2) with the control parameters (20), for selecting at least one string to be converted (30a) within the main signal (30);
- apply the conversion parameters (21) to the string to be converted (30a), obtaining the corresponding converted string (30b);
- generate a transmit signal (31) incorporating the converted string (30b);
- send the transmit signal (31) to the computer (5) through the output interface (4).

18. The device according to claim 17, **characterised in that** the circuit apparatus (6) also comprises an addressing block (7), the latter having:
- a first communication port (7a) connected to the input interface (2), for receiving the main signal (30) from the input interface (2);
- a second communication port (7b) connected to the output interface (4), for sending the main signal (30) and the transmit signal (31) to the computer (5) through the output interface (4);
- a third communication port (7c) connected to the CPU (9), for sending the main signal (30) to the CPU (9).

19. The device according to claim 17, **characterised in that** the main signal (30) is of the scan code type.

20. The device according to claim 17 or 18, **characterised in that** the transmit signal (31) is of the scan code type.

21. The device according to any of the claims from 17 to 20, **characterised in that** the CPU (9) is also designed to generate a delete signal (32) for the string to be converted (30a), said signal being intended for the computer (5), allowing substitution of the string to be converted (30a) with the converted string (30b).

22. The device according to claim 21, **characterised in that** the delete signal (32) is of the scan code type.

23. The device according to claim 17, **characterised in that** the string to be converted (30a) contains a number which expresses a preset quantity according to a first unit of measurement.

24. The device according to claim 23, **characterised in that** the converted string (30b) contains a number which expresses said preset quantity according to a second unit of measurement, the latter being different from the first unit of measurement.

25. The device according to claim 24, **characterised in that** the conversion parameters (21) saved in the memory (8) comprise a preset number of constants, allowing the CPU (9) to calculate the preset quantity expressed in the second unit of measurement, starting with the preset quantity expressed in the first unit of measurement.

26. The device according to claim 24, **characterised in that** the first unit of measurement is a currency.

27. The device according to claim 26, **characterised in that** the second unit of measurement is a currency, preferably the Euro.

28. The device according to claim 17, **characterised in that** the memory (8) comprises a first register (40) for saving a preset combination of keys used by a user when a conversion must be performed.

29. The device according to claim 17, **characterised in that** the memory (8) comprises a second register (41) for saving the string to be converted (30a).

30. The device according to claim 17, **characterised in that** memory (8) comprises a third register (42) for saving the converted string (30b).

31. The device according to claim 27, **characterised in that** the memory (8) comprises a preset number of records (43), each record having a first field (43a) and at least one second field (43b) associated with the first field (43a), the first field (43a) being designed to contain a unique identification code associated with a preset nation, the second field (43b) being designed to contain the parameters needed to convert a sum expressed in the first currency into the second currency, said first currency being the currency of a preset nation and the second currency preferably being the Euro.

32. An electronic data processing apparatus comprising:
- a computer (5) able to receive input signals and process the data incorporated in said signals, supplying the corresponding results as output;
- a data entry device (3) connected to the computer (5) and designed to allow a user to enter at least one string to be converted (30a) for the computer, and being able to send the computer (5) a main signal (30) incorporating the string to be converted (30a), the apparatus being **characterised in that** it also comprises a string converter (1) with the characteristics and limitations indicated in any of the claims from 1 to 16.
